# FASCICULE DE BREVET EUROPEEN

(11) **EP 0 459 343 B1**
(45) Date de publication et mention de la délivrance du brevet: **08.03.1995**
(21) Numéro de dépôt: 91108565.2
(22) Date de dépôt: 27.05.1991
(51) Int. Cl.: H04M 1/00, H04M 1/274, H04Q 11/04

(54) **Poste téléphonique à spécifications adaptables**
Fernsprechapparat mit anpassbaren Spezifikationen
Telephone set with adaptable specifications

(30) Priorité: 31.05.1990 FR 9006785
(43) Date de publication de la demande: 04.12.1991
(73) Titulaire: ALCATEL BUSINESS SYSTEMS, F-75008 Paris (FR)
(72) Inventeur: Veislinger, Yves, F-92700 Colombes (FR); Raymond, Françoise, F-75019 Paris (FR); Malaurie, Claude, F-95120 Ermont (FR)
(74) Mandataire: Weinmiller, Jürgen

(56) Documents cités:
- EP-A- 0 098 201
- WO-A-89/11195
- DE-A- 3 733 717
- GB-A- 2 211 695
- ELEKTRONIK vol. 38, no. 6, 17 Mars 1989, MUNICH pages 60 - 66; O TOOLE: 'AUFBAU EINES ISDN-TERMINALS'
- ELEKTRONIK vol. 32, no. 7, Avril 1983, MUNICH pages 12 - 14; 'ISSCC 83 :SPIEGELT PRODUKTENTWICKLUNGEN WIEDER '

## Description

La présente invention se rapporte à un poste téléphonique à spécifications adaptables.

Un poste téléphonique doit répondre à des spécifications qui non seulement peuvent différer d'un pays à l'autre, mais encore peuvent être susceptibles de changer dans un même pays.

Ces spécifications sont par exemple des gabarits en phase transitoire, des longueurs de numérotation , des rapports cycliques, des gammes de courant , des normes d'exploitation, etc...

Les postes téléphoniques modernes sont équipés d'un microprocesseur spécifique appelé microcontrôleur. Ils peuvent en outre être équipés d'une mémoire non volatile, dite E2PROM ou EEPROM, qui permet d'y stocker des données correspondant notamment à des numéros de téléphone privilégiés, classiquement les plus utilisés. Pour approvisionner divers pays en postes téléphoniques répondant à des spécifications différentes, il existe deux façons classiques de faire:
. Une première consiste à fabriquer autant de modèles de poste, contenant chacun un microcontrôleur programmé une fois pour toutes qu'il y a de pays destinataires. Cette solution simple pose de gros problèmes de stockage et d'identification, elle se révèle par suite très onéreuse à mettre en oeuvre.
. Une seconde consiste à prévoir un microcontrôleur commun à tous les postes et à réaliser l'adaptation aux différentes configurations par action sur des micro-interrupteurs, prévus à l'intérieur de chaque poste et reliés à différentes bornes d'accès de son microcontrôleur.

De manière équivalente, on peut aussi utiliser des straps ou des cavaliers, des adjonctions ou suppressions d'organes, des masques particuliers de microcontrôleur, etc...

La demande EP-A-0 098 201 propose un poste téléphonique comportant outre les fonctions de base un circuit de transmission et de réception asynchrone et une mémoire volatile, permettant le téléchargement, à partir de moyens extérieurs, de la configuration du poste. La configuration est cependant volatile et nécessite des moyens de téléchargement adaptés non compatible avec un poste destiné à une utilisation standard.

Il s'agit là finalement de moyens plutôt complexes et onéreux, nécessitant de surcroît l'utilisation de plusieurs bornes d'accès, ou ports, du microcontrôleur.

En outre , que l'on utilise l'une ou l'autre de ces façons de faire, on n'est jamais vraiment certain qu'un poste téléphonique déterminé possède bien la configuration souhaitée.

Une erreur humaine est toujours possible, la vérification de la configuration de ce poste étant difficile et en pratique limitée à un contrôle visuel.

Cette vérification est éventuellement facilitée lorsque les postes ont des spécifications qui sont consignées sous forme de données dans des mémoires associées à leurs microcontrôleurs respectifs, en particulier en mémoire E2PROM et elle le serait d'autant plus si le poste comportait un afficheur, ce qui n'est toutefois pas le cas pour les postes à faible coût.

L'invention propose donc un poste téléphonique, à spécifications adaptables, agencé pour permettre, simplement et à faible coût, la prise de connaissance des spécifications qui le configure et une éventuelle modification de ces spécifications, lorsque ce poste comporte au moins un microcontrôleur, un générateur de signaux de numérotation téléphonique, une mémoire non volatile, notamment de type E2PROM, apte à conserver des données d'information, telles que celles de numéros de téléphone privilégiés ou de spécifications du poste, dans des portions correspondantes réservées de cette mémoire non volatile.

Selon une caractéristique de l'invention, le microcontrôleur est programmé pour commander une émission, sous forme de signaux de numérotation par le générateur, des données de spécification contenues dans la portion réservée correspondante de mémoire volatile, suite à la réception d'un signal caractéristique appliqué au poste, mis à l'état décroché.

L'invention , ses avantages et ses caractéristiques sont précisés dans la description suivante d'un exemple de réalisation en relation avec les figures évoquées ci-dessous.

La figure 1 présente un schéma synoptique d'un poste téléphonique.

La figure 2 présente un synoptique du genre organigramme qui montre le mode d'utilisation d'un poste pour la visualisation de ses spécifications et pour l'introduction de nouvelles spécifications.

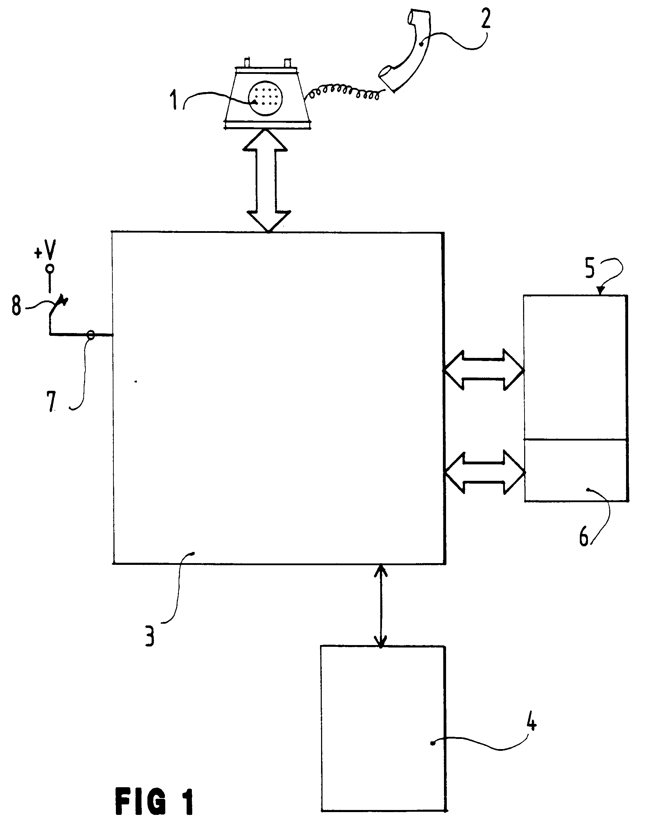

La figure 1 est relative à un poste téléphonique moderne d'un modèle courant qui possède un clavier à touches 1, un combiné 2 dont le décrochement entraîne classiquement la mise sous tension de l'appareil, un microcontrôleur spécifique 3, un générateur 4 de signaux de numérotation téléphonique, et une mémoire non volatile 5.

Le générateur 4 est par exemple un générateur à fréquences vocales de type Q23, selon les recommandations du CCITT, la mémoire 5 est par exemple une mémoire de type E2PROM dans laquelle on peut classiquement stocker , à l'aide du clavier 1, un certain nombre de numéros d'appel téléphonique de correspondants privilégiés.

Une portion 6 de la mémoire 5 n'est pas affectée au stockage des données relatives à ces numéros privilégiés étant affectée au stockage de celles qui sont relatives aux spécifications particulières au poste considéré.

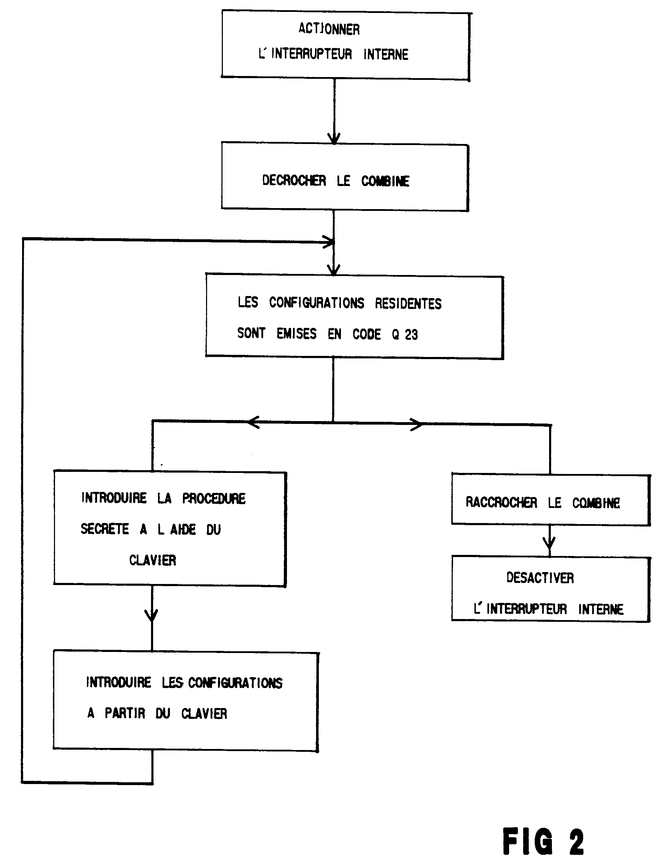

Par ailleurs une des bornes d'accès 7 du microcontrôleur 3 est connectée à un interrupteur 8, par exemple un microinterrupteur, relié à la tension d'alimentation (+V) de ce microcontrôleur, et ce dernier est programmé pour effectuer les opérations décrites ci-dessous en relation avec la figure 2.

Les opérations soit de visualisation des spécifications contenues dans la portion (6) de mémoire non volatile 5, soit d'entrée de nouvelles spécifications et éventuellement de celles-ci une fois rentrées, sont par exemple initiées par la fermeture de l'interrupteur 8 qui se traduit pratiquement par l'envoi d'un signal caractéristique vis-à-vis du microcontrôleur, lorsque le poste est alimenté. L'interrupteur 8 est préférablement logé à l'intérieur du poste qui le comporte afin de ne pas être accessible à l'usager.

Préalablement, un dispositif de test de poste du commerce, comportant un écran de visualisation, a été branché sur le poste. De tels dispositifs sont classiquement utilisés par les dépanneurs.

La mise sous tension du poste par décrochage du combiné entraîne l'émission des données de spécification sous forme de signaux de numérotation, par exemple en code Q23 comme indiqué plus haut, et ces signaux se visualisent sous forme lisible sur l'écran du dispositif de test de même manière que des signaux classiques de numérotation.

S'il s'agit uniquement de prendre connaissance et/ou de vérifier les spécifications relatives à la configuration d'un poste, l'opération s'arrête là et le raccrochement du combiné désactive l'interrupteur 8.

Si en revanche il est nécessaire de modifier les spécifications définissant la configuration d'un poste, c'est-à-dire de remplacer des données en portion 6 de mémoire non volatile 5, il est prévu d'avoir à fournir un code secret à l'aide du clavier 1 au microcontrôleur 3 pour que celui-ci, dûment programmé de manière connue en soi permette d'introduire les nouvelles données de spécification fournies par l'intermédiaire du clavier 1. Une visualisation de ces données de spécification est préférablement assurée automatiquement sur l'écran du dispositif de test pour permettre de vérifier qu'aucune erreur n'a été commise. Une exploitation automatique de cette séquence de vérification peut aussi être prévue.

Le raccrochement du combiné assure la désactivation de l'interrupteur 8 comme déjà prévu.

On obtient les avantages suivants :

Il n'est prévu, à la fabrication, qu'un seul modèle de poste téléphonique pour un grand nombre de pays, avec en particulier un seul modèle de microcontrôleur.

L'affectation des postes aux différentes configurations peut, au choix, être effectuée soit en sortie de chaîne de fabrication, soit en cours de fabrication, soit par l'installateur.

Il y a une possibilité permanente de modifier partiellement ou totalement les données de spécification d'un poste.

Une seule borne de microcontrôleur suffit pour mettre en oeuvre l'invention, ce qui réduit notablement les coûts. Ceux-ci sont en outre réduit par la réduction du nombre de composants externes nécessaires, par la simplification correspondante du circuit imprimé sur lequel le microcontrôleur est généralement monté et par la possibilité d'introduction de spécification pour une configuration standard en mémoire non volatile à la fabrication, cette configuration correspondant par exemple à la demande la plus fréquente.

La modification accidentelle des configurations est rendue tout à fait improbable dans la mesure où elle implique une manoeuvre de l'interrupteur interne 8, suivie de l'introduction du code secret, l'une et l'autre alors que le combiné est décroché et que le poste est alimenté.

Selon une forme de réalisation la mémoire 5 est susceptible d'être incluse dans le microcontrôleur lui-même.

Selon une variante de réalisation, un code secret tabulé au clavier 1 peut éventuellement constituer le signal caractéristique d'autorisation pour le déclenchement de l'émission des données de spécification sous la commande du microcontrôleur 3 à destination d'un dispositif de test branché aux bornes du poste téléphonique, l'interrupteur 8 étant alors superflu.

Dans ce cas, les phases "activer l'interrupteur interne" et "désactiver l'interrupteur interne"du diagramme de la figure 2 sont supprimées et la phase "introduire la procédure secrète à l'aide du clavier" est déplacée pour suivre immédiatement, avant toute phase selon l'invention, la phase de décrochement du combiné pour alimenter le poste.

## Revendications

1. Poste téléphonique, à spécifications adaptables, comportant au moins un microcontrôleur (3), un générateur de signaux de numérotation téléphonique (4), une mémoire non volatile (5), notamment de type E2PROM, apte à conserver des données d'information, telles que celles de numéros de téléphone privilégiés ou de spécifications du poste, dans des portions correspondantes réservées de cette mémoire non volatile, caractérisé en ce que le microcontrôleur est programmé pour commander, à des fins de vérification, une émission, sous forme de signaux de numérotation par le générateur, des données de spécification contenues dans la portion réservée correspondante de mémoire non volatile, suite à la réception d'un signal caractéristique appliqué au poste, mis à l'état décroché.

2. Poste téléphonique selon la revendication 1, muni d'un clavier caractérisé en ce qu'il comporte un interrupteur interne (8) d'envoi de signal caractéristique d'autorisation pour le déclenchement d'émission des données de spécification par le microcontrôleur.

3. Poste téléphonique, selon au moins l'une des revendications 1 et 2, muni d'un clavier (1) destiné à agir sur le générateur de numérotation téléphonique (4) du poste, caractérisé en ce qu'il comporte un micorocontrôleur (3) programmé pour écrire en portion de mémoire non volatile, réservée aux données de spécification du poste, les données fournies par l'intermédiaire du clavier, suite à la réception d'un code secret après un signal caractéristique d'autorisation.

4. Poste téléphonique, selon la revendication 3, caractérisé en ce que le microcontrôleur (3) est programmé pour commander l'écriture en portion, réservée aux données de spécification du poste, de la mémoire non volatile, à réception d'un code spécifique provenant du clavier, suite à un signal caractéristique d'autorisation.

5. Poste téléphonique, selon au moins l'une des revendication 1 à 4, caractérisé en ce qu'il comporte un microcontrôleur (3) avec lequel est incorporée la mémoire non volatile (5) contenant notamment les données de spécification.

## Patentansprüche

1. Telefonapparat mit anpaßbaren Spezifikationen, der mindestens ein Mikrokontrollgerät (3), einen Generator von Nummernwahlsignalen (4) und einen nicht-flüchtigen Speicher (5), insbesondere des Typs E2PROM aufweist, der Informationsdaten wie zum Beispiel häufig gewählt Telefonnummern oder Spezifikationen des Apparats in entsprechenden reservierten Bereichen dieses nicht-flüchtigen Speichers speichern kann, dadurch gekennzeichnet, daß das Mikrokontrollgerät so programmiert ist, daß es zu Überprüfungszwecken eine Aussendung der im reservierten Bereich des flüchtigen Speichers enthaltenen Spezifikationsdaten in Form von Nummernwahlsignalen durch den Generator steuert, und zwar nach Empfang eines an den Apparat bei abgehobenem Hörer angelegten charakteristischen Signals.

2. Telefonapparat nach Anspruch 1 mit einer Tastatur, dadurch gekennzeichnet, daß er einen inneren Schalter (8) zum Aussenden eines charakteristischen Freigabesignals zur Auslösung des Aussendens von Spezifikationsdaten durch das Mikrokontrollgerät aufweist.

3. Telefonapparat nach mindestens einem der Ansprüche 1 und 2 mit einer Tastatur (1), die auf den Generator für die Nummernwahlsignale (4) des Apparats einwirkt, dadurch gekennzeichnet, daß er ein Mikrokontrollgerät (3) aufweist, das so programmiert ist, daß es in einen Bereich des nicht-flüchtigen Speichers, der für die Spezifikationsdaten des Apparats reserviert ist, die über die Tastatur eingegebenen Daten aufgrund des Empfangs eines Geheimkodes nach einem charakteristischen Freigabesignal einschreibt.

4. Telefonapparat nach Anspruch 3, dadurch gekennzeichnet, daß das Mikrokontrollgerät (3) so programmiert ist, daß es einen Bereich des nicht-flüchtigen Speichers, der für die Spezifikationsdaten des Apparats reserviert ist, bei Erhalt eines von der Tastatur kommenden spezifischen Kodes nach einem charakteristischen Freigabesignal beschreibt.

5. Telefonapparat nach mindestens einem der Ansprüche 1 bis 4, dadurch gekennzeichnet, daß er ein Mikrokontrollgerät (3) aufweist, in das der nicht-flüchtige Speicher (5) integriert ist, der insbesondere die Spezifikationsdaten enthält.

## Claims

1. Dynamically configurable telephone comprising at least a microcontroller (3), a telephone dialling signal generator (4) and a non-volatile memory (5) such as an E2PROM adapted to store data such as telephone numbers or specifications of the telephone in respective reserved portions of said non-volatile memory, characterised in that, for verification purposes, the microcontroller is programmed to command output in the form of dialling signals of specification data stored in the respective reserved portion of non-volatile memory in response to reception of a characteristic signal applied to the telephone in the off-hook condition.

2. Telephone according to claim 1 having a keypad and characterised in that it further comprises an internal switch (8) for applying said characteristic signal to authorise output of specification data by the microcontroller.

3. Telephone according to claim 1 or claim 2 comprising a keypad (1) adapted to control the telephone dialling signal generator (4) and characterised in that it includes a microcontroller (3) programmed to write in a portion of non-volatile memory reserved for specification data of the telephone data entered via the keypad in response to reception of a secret code after reception of a characteristic authorisation signal.

4. Telephone according to claim 3 characterised in that the microcontroller (3) is programmed to command the writing of a portion of non-volatile memory reserved for specification data of the telephone in response to receiving a specific code from the keypad after a characteristic authorisation signal is received.

5. Telephone according to any one of claims 1 to 4 characterised in that it includes a microcontroller (3) incorporating the non-volatile memory (5) containing the specification data.
